Europäisches Patentamt

European Patent Office

Office européen des brevets

(19)

(11) Veröffentlichungsnummer: **0 271 048 B1**

(12) **EUROPÄISCHE PATENTSCHRIFT**

(45) Veröffentlichungstag der Patentschrift: **11.03.92**

(51) Int. Cl.⁵: **F41H  5/00**, F41H 7/02

(21) Anmeldenummer: **87118091.5**

(22) Anmeldetag: **08.12.87**

(54) Verankerungselement.

(30) Priorität: **12.12.86 DE 3642535**

(43) Veröffentlichungstag der Anmeldung:
**15.06.88 Patentblatt  88/24**

(45) Bekanntmachung des Hinweises auf die
Patenterteilung:
**11.03.92 Patentblatt  92/11**

(84) Benannte Vertragsstaaten:
**CH DE FR GB IT LI SE**

(56) Entgegenhaltungen:
**EP-A- 0 202 563**
**DE-A- 3 410 962**
**DE-B- 2 324 724**
**DE-C- 2 542 142**
**US-A- 4 398 446**

(73) Patentinhaber: **IBP Pietzsch GmbH**
**Hertzstrasse 32-34**
**W-7505 Ettlingen(DE)**

(72) Erfinder: **Hartmann, Rudolf**
**Finkenweg 8**
**W-7516 Karlsbad(DE)**

(74) Vertreter: **Geitz, Heinrich, Dr.-Ing.**
**Postfach 2708 Kaiserstrasse 156**
**W-7500 Karlsruhe 1(DE)**

EP 0 271 048 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf ein Verankerungselement nach dem Oberbegriff des Patentanspruchs zum Befestigen schwerer Platten od. dgl. an einem Verankerungsgrund, insbesondere zum Befestigen von Panzerungselementen oder Zusatzpanzerungen an Fahrzeugen.

Die Erfindung geht aus von einem zum Befestigen von Panzerungselementen oder Zusatzpanzerungen an Fahrzeugen bestimmten Verankerungselement (DE-B2-23 24 724) das einen begrenzt elastisch verformbaren Pufferkörper aus Gummi oder einem Material ähnlicher Federungs- und Dämpfungseigenschaften sowie zwei fest mit dem Pufferkörper verbundene und durch diesen auf Abstand voneinander gehaltene Befestigungsteile besitzt, die im Rahmen der Verformbarkeit des Pufferkörpers begrenzt gegeneinander bewegbar sind und von denen das eine mit dem zu verankernden Panzerungselement und das andere mit dem Verankerungsgrund verbindbar ist.

Verankerungselemente dieser Art haben die Aufgabe, Panzerungselemente oder Zusatzpanzer derart gefedert und gedämpft mit einem Verankerungsgrund, etwa einem zu schützenden Fahrzeug zu verbinden, daß auf die Panzerungselemente von außen einwirkende Schuß-Impulse, die nach Betrag und Richtung nicht vorhersehbar sind, weitestgehend abgebaut werden.

Bei dem vorbekannten Verankerungselement handelt es sich um ein Gummielement mit einem rotationssymmetrisch ausgebildeten Pufferkörper, in den sich von seiner einen Stirnseite aus als Befestigungsteil eine einvulkanisierte Gewindehülse hineinerstreckt, während das andere Ende in einem zweiten Befestigungsteil fest eingespannt ist. Bei bestimmungsgemäßer Verwendung ist das letztgenannte Befestigungsteil mit dem eingespannten Ende des Pufferkörpers mit Teilen des zu schützenden Fahrzeugs fest verbunden und der Pufferkörper erstreckt sich zwischen den genannten Teilen des Fahrzeugs und einem an seiner von Einspannende entfernten Stirnseite anliegenden Panzerungselement od. dgl., das von einer in die einvulkanisierte Gewindehülse eingeschraubten Befestigungsschraube durchdrungen und in seiner Lage gehalten ist.

Unbefriedigend bei diesem Verankerungselement erscheint, daß angesichts der Einspannung des rotationssymmetrisch ausgebildeten Pufferkörpers an seinem einen Ende in einem den Anschluß an Fahrzeugteile vermittelnden Befestigungsteil und angesichts der sich vom anderen Stirnende in den Pufferkörper hineinerstreckenden Gewindehülse für die Aufnahme einer Befestigungsschraube trotz notwendig großer Axialerstreckung ein nur sehr begrenztes Volumen des Pufferkörpers dessen Feder- und Dämpfungseigenschaften bestimmt. Die eingespannten Teile des Pufferkörpers haben angesichts der Inkompressibilität des Puffermaterials hingegen keinerlei und die die einvulkanisierte Gewindehülse umschließenden Teile nur einen ganz unbedeutenden Anteil an der realisierten Feder- und Dämpferwirkung.

Vor allem aber führt die große axiale Baulänge des Pufferkörpers und damit des gesamten Pufferlements zu großen Abständen zwischen den Befestigungspunkten eines Fahrzeugs,oder eines sonstigen Verankerungsgrundes, und den an diesen anzubringenden Panzerungselementen oder Zusatzpanzerungen, was eine höchst unerwünscht große Silhouette eines unter Verwendung derartiger Pufferelemente mit Panzerungselementen bestückten Panzerfahrzeugs nach sich zieht.

Demgemäß soll durch die Erfindung ein verbessertes Verankerungselement für den eingangs angegebenen Zweck geschaffen werden, mittels dessen insbesondere die Befestigung von Panzerungselementen oder Zusatzpanzerungen an Fahrzeugen ganz allgemein aber auch die Befestigung schwerer Platten od. dgl. an einem beliebigen Verankerungsgrund, bei wesentlich kleineren Abständen vom Verankerungsgrund ohne Minderung der Feder- und Dämpferwirkung gelingt.

Diese Aufgabe ist gemäß der Erfindung dadurch gelöst, daß bei dem Verankerungselement nach dem Oberbegriff des Patentanspruchs 1 der Pufferkörper plattenförmig ausgebildet ist, daß jedes Befestigungsteil ein Bodenblech von im Vergleich zu seiner Flächenausdehnung geringer Dikke besitzt und daß die Bodenbleche den Pufferkörper zwischen sich aufnehmen sowie mit letzterem in den jeweiligen Kontaktebenen flächenhaft verbunden sind, etwa durch Kleben oder Vulkanisieren.

Kennzeichnend für die Erfindung ist mithin, daß jegliche Einspannung von Teilen des Pufferkörpers peinlich vermieden ist und demgemäß der zwischen den Bodenblechen aufgenommene plattenförmige Pufferkörper in seiner Gesamtheit als Feder- und Dämpferelement wirksam ist.

In Verbindung mit den Bodenblechen geringer Dicke ist dadurch ein kompakt bauendes Verankerungselement verwirklicht, dessen Abmessungen zwischen den Außenflächen der Bodenbleche vergleichsweise klein sind. Dadurch gelingt die Anbringung von Panzerplatten oder sonstigen Panzerungselementen beispielsweise bei einem Panzerfahrzeug, oder auch einer Zusatzpanzerung bei Geschützen oder dgl, in äußerst geringem Abstand von den Verankerungsflächen. Bei Fahrzeugpanzerungen führt dies zu einer höchst wünschenswerten Reduzierung der Außenabmessungen solcher Fahrzeuge und mithin zu einer gerade bei Panzerfahrzeugen angestrebten kleinen Silhouette.

Eine zweckmäßige Weiterbildung der Erfindung ist dadurch gekennzeichnet, daß der Pufferkörper und/oder die Bodenbleche der die Verbindung des Verankerungselements mit einem Verankerungsgrund einerseits und mit an letzterem zu befestigenden Panzerungselementen andererseits vermittelnden Befestigungteile mit Ausnehmungen zum Begünstigen der elastischen Verformbarkeit des Puffers infolge Ausweichens von Puffermaterial in die von den Ausnehmungen gebildeten Freiräume hinein versehen ist.

Durch die Anordnung und Bemessung derartiger Freiräume für im Verformungsfalle ausweichendes Puffermaterial gelingt es in höchst wünschenswerter Weise, die Federhärte und Dämpfungseigenschaften des Pufferkörpers und damit des gesamten Verankerungslements einzustellen. Die Ausnehmungen im Pufferkörper können dabei zweckmäßigerweise im Bereich der Kontaktebenen mit wenigstens einem der Bodenbleche der Befestigungteile angeordnet sein.

Eine andere wichtige Ausgestaltung der Erfindung sieht vor, daß der Pufferkörper von wenigstens einer sich im Abstand von den Bodenblechen der Befestigungteile erstreckenden Ausnehmung quer durchdrungen ist und daß in letzterer ein Stopfen aus Puffermaterial einer vom Material des Pufferkörpers abweichenden Härte aufgenommen ist. Auch diese Maßnahme dient einer durchaus wünschenswerten Einstellung der Feder- und Dämpfungseigenschaften des Pufferkörpers, etwa zwecks Anpassung an unterschiedliche Temperaturen.

Eine für die vorzugsweise Zweckbestimmung des erfindungsgemäßen Verankerungselementes zum Befestigen von Panzerungselementen oder Zusatzpanzerungen an Fahrzeugen od. dgl. besonders vorteilhafte Ausgestaltung der Erfindung besteht darin, daß in den Pufferkörper einander mit Spiel hintergreifende und dessen elastische Verformbarkeit innerhalb vorgegebener Grenzen zulassende Haltemittel eingebettet und wechselseitig mit den den Pufferkörper zwischen sich aufnehmenden Bodenblechen der Befestigungteile fast verbunden sind.

Der Sinn dieser Maßnahme besteht darin, im Falle einer Zerstörung der nur bis zu vorbestimmten Temperaturen beständigen Pufferkörper ein Herunterfallen der mittels erfindungsgemäßer Verankerungselemente befestigten Panzerungselemente oder Zusatzpanzerungen zu verhindern, indem dann die einander formschlüssig umgreifenden Haltemittel wirksam werden.

Eine zweckmäßige Weiterbildung dieser wichtigen Ausgestaltung sieht vor, daß mit jedem Bodenblech der beiden Befestigungteile eines Verankerungselements als Haltemittel wenigstens eine bügelartig ausgebildete Öse verschweißt ist und daß die in den Pufferkörper eingebetteten, vorzugsweise einvulkanisierten, Ösen einander mit solchem Spiel umgreifen, daß innerhalb vorbestimmter Grenzen eine Verformung des Pufferkörpers unter äußerer Impulswirkung auf ein Panzerungselement od. dgl. stattfinden kann.

Eine andere Weiterbildung dieser Ausgestaltung ist durch wenigstens eine mit gegenseitigem Spiel ihrer einzelnen Glieder in den Pufferkörper eingebettete Kette als Haltemittel gekennzeichnet, deren voneinander entfernte Enden jeweils mit einem der beiden Bodenbleche der Befestigungteile fest verbunden sind.

Auch bei dieser Weiterbildung wird das Haltemittel erst nach einer etwaigen Zerstörung des Pufferkörpers wirksam, indem dann die in ihrer Einbettlage im Pufferkörper dessen Verformbarkeit innerhalb vorbestimmter Grenzen nicht beeinträchtigenden Kettenglieder in eine gegenseitige formschlüssige Haltelage gelangen und ein Herunterfallen eines Panzerungselements, das mittels derartiger Verankerungselemente befestigt ist, verhindern.

Eine nochmals andere Weiterbildung des vorgenannten Merkmals sieht vor, daß als Haltemittel wenigstens ein flexibles Seil aus hochfestem Werkstoff, etwa aus Keflar, spiralig durch Lochungen in den Bodenblechen hindurchgezogen und mit letzteren durch Festlegung der jeweiligen Seilenden sowie durch Einbettung in den Pufferkörper fest verbunden ist.

Auch bei dieser Weiterbildung sind im Falle einer Zerstörung der Pufferkörper die verankerten Panzerungselemente, Platten od. dgl. noch immer formschlüssig fest gehalten.

Der gleiche Effekt tritt auch ein, wenn gemäß einer nochmaligen Weiterbildung der vorgenannten Ausgestaltung als einander formschlüssig mit Spiel hintergreifende Haltemittel mit dem einen Bodenblech ein im Pufferkörper eingebetteter Haltekorb, der wenigstens eine Ausnehmung aufweist, und ein mit dem anderen Bodenblech fest verbundener Schaft dienen, der sich durch die Ausnehmung im Haltekorb hindurcherstreckt und einen den Haltekorb auf der anderen Seite formschlüssig hintergreifenden Teller am freien Schaftende besitzt. Als vorteilhaft hat sich dabei erwiesen, wenn die Ausnehmung in dem mit dem einen Bodenblech festverbundenen Haltekorb langlochartig oder oval und der Teller am freien Ende des mit dem anderen Bodenblech festverbundenen Schafts hammerkopfartig ausgebildet sind, wobei der Teller mit seiner Längserstreckung um etwa 90° verdreht gegenüber der Längerstreckung der Ausnehmung im Haltekorb angeordnet ist.

Gemäß einer anderen wichtigen Ausgestaltung der Erfindung ist die unproblematische Montage und Demontage von Panzerungselementen od. dgl. mittels der erfindungsgemäßen Verankerungselemente dadurch verwirklicht, daß die Befestigungsteile aus den fest mit dem Pufferkörper verbundenen Bodenblechen und am Verankerungsgrund einerseits und an den zu verankernden Platten od. dgl. andererseits befestigbaren Halteblechen bestehen und daß die Bodenbleche und Halteblechen mit Schnellkupplungsmitteln zum Herstellen einer festen, jedoch wahlweise lösbaren Verbindung versehen sind.

Als zweckmäßig hat es sich bei dieser Ausgestaltung erwiesen, wenn die Schnellkupplungsmittel zum Herstellen einer festen, jedoch wahlweise lösbaren Verbindung aus Führungsflächen an zwei einander gegenüberliegenden Längskanten der Bodenbleche und letztere zwischen sich aufnehmenden sowie die Längskanten der Bodenbleche auf der zum Pufferkörper hinweisenden Seite zumindest abschnittsweise formschlüssig übergreifenden Führungsabschnitten der Halteblechen bestehen und die Bodenbleche von einer Seite aus zwischen die Führungsabschnitte der Halteblechen einschiebbar sind.

Eine derartige Ausbildung der Schnellkupplungsmittel zeichnet sich nicht nur durch einen besonders einfachen Aufbau und einfache Handhabbarkeit aus, sondern insbesondere auch dadurch, daß die im Interesse eines geringen Abstandes zwischen den zu verankernden Teilen und einem Verankerungsgrund angestrebte flache Bauweise des Verankerungselementes nicht beeinträchtigt wird.

Wenn nach einem weiterbildenden Merkmal die Führungsflächen der Bodenbleche und die damit korrespondieren-Führungsabschnitte der Halteblechen in der Art von Schwalbenschwanzführungen ausgebildet sind, ist gleichermaßen eine präzise Aufnahme der Bodenbleche zwischen den Führungsabschnitten der einerseits mit dem Verankerungsgrund und andererseits mit dem zu verankernden Bauteil verbundenen Halteblechen bei gleichzeitig formschlüssig fester Verbindung gewährleistet.

Um einen sicheren Sitz der Bodenbleche in ihrer Einschublage zwischen den Führungsabschnitten der Halteblechen zu gewährleisten, können formschlüssig wirksame Arretierungsmittel vorgesehen sein. Eine Weiterbildung der Erfindung sieht hingegen vor, daß die Führungsabschnitte der Haltebleche, in einer Draufsicht gesehen, sich zu einer Einschubseite für die Bodenblech unter einem Selbsthemmung vermittelnden Öffnungswinkel divergierend zueinander erstrecken, während die damit korrespondierenden Führungsflächen der Bodenbleche eine angepaßte Keilform bilden.

Wenn bei einer derartigen Weiterbildung die Bodenbleche von der Einschubseite aus zwischen die sich zu letzterer hin unter einem vorbestimmten Öffnungswinkel divergierend erstreckenden Führungsabschnitte der Haltebleche eingeschoben und unter leichter Krafteinwirkung in Einschubrichtung in ihre Endmontagelage gebracht werden, tritt infolge Selbsthemmung im Bereich der miteinander korrespondierenden Führungsflächen gewissermaßen eine Verankerung der Bodenbleche zwischen den Halteblechen ein.

Während die Schnellkupplungsmittel nach den vorstehend erörterten Weiterbildungen der zuletztgenannten Ausgestaltung vornehmlich quer zur Einschubrichtung belastbar sind, ermöglicht eine Weiterbildung dergestalt, daß die mit dem Pufferkörper festverbundenen Bodenbleche und die am Verankerungsgrund einerseits sowie an den zu verankernden Panzerungselementen oder dergleichen andererseits befestigbaren Haltebleche als - im montierten Zustand - einander umschließende und miteinander formschlüssig hintergreifenden Verrastungskonturen als Schnellkupplungsmittel zum Herstellen einer festen, jedoch wahlweise lösbaren Verbindung versehene Scheiben ausgebildet sind, eine allseitige Belastbarkeit.

Die Verrastungskonturen der Bodenbleche und Haltebleche können dabei als über den jeweiligen Scheibenumfang verteilt angeordnete und infolge Verdrehung des Verankerungselements in eine einander formschlüssig hintergreifende Kupplungslage bringbare bzw. entriegelbare radiale Ansätze ausgebildet sein, die in der Kupplungslage eine Art Bajonettverschluß bilden. Die radialen Ansätze der Bodenbleche und/oder der Haltebleche können auch mit spiraligen oder exzentrischen Anzugsflächen versehen sein, die in der Kupplungslage formschlüssig und unter Klemmung zusammenwirken.

Andererseits können die Bodenbleche mit Außengewinden und die Haltebleche mit entsprechenden Innengewinden als Verrasterungskonturen versehen sein und die beiden Bodenbleche, und entsprechend auch natürlich die zugeordneten Haltebleche, gegenläufige Gewinde gleicher Steigung aufweisen, so daß ein gleichzeitiges Einschrauben der beiden Bodenplatten in die gegengewinde der bei bestimmungsgemäßer Verwendung mit dem Verankerungsgrund einerseits und mit den zu verankernden Platten andererseits festverbundenen Haltebleche gelingt.

Bei den Ausführungsformen, bei denen die Schnellkupplungsmittel als durch Drehung der Verankerungselemente um ihre sich im wesentlichen rechtwinklig zu den Flächenerstrekkungen der Bodenbleche verlaufende Achsen in Kupplungslage bringbaren bzw. entriegelbaren Verrastungskonturen ausgebildet sind, können mit den Bodenblechen radial über diese vorstehenden Einstellscheiben mit Außenverzahnungen zum Ansetzen von Hakenschlüsseln oder ähnlichen Betätigungswerkzeugen fest verbunden sein, die eine schnelle und einfache Montage bzw. Demontage ermöglichen.

Anhand der beigefügten Zeichnungen sollen nachstehend einige Ausführungsformen des erfindungsgemäßen Verankerungselements und deren bestimmungsgemäße Verwendung erläutert werden. In schematischen Ansichten zeigen:

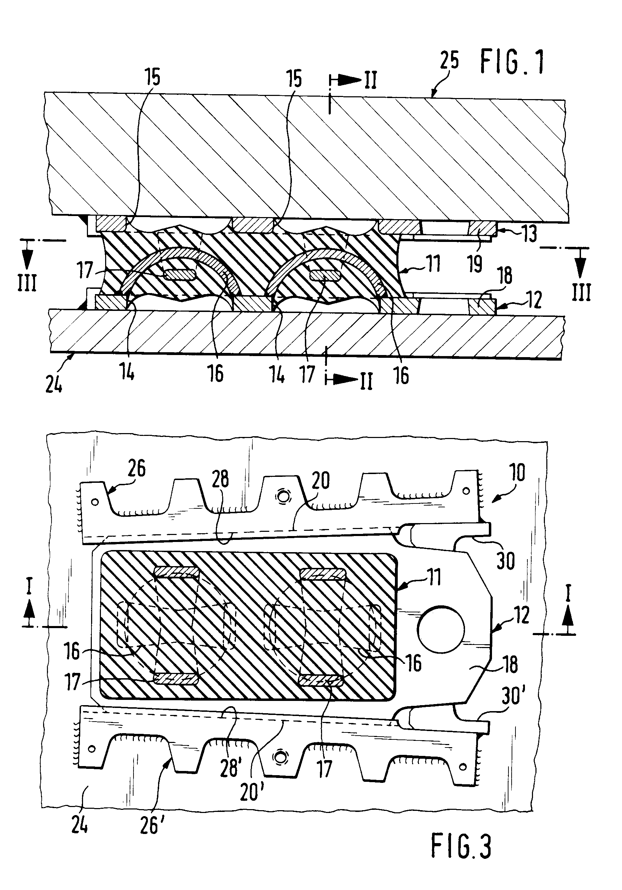

Fig. 1    eine erste Ausführungsform in einer Längsschnittansicht gemäß Schnittlinie I-I in Fig. 3 in einer ein Panzerungselement mit der Wanne eines Panzerfahrzeugs verbindenden Einbaulage,

Fgi. 2    einen Querschnitt gemäß der Schnittlinie II-II in Fig. 1 durch das in der Einbaulage befindliche Verankerungselement,

Fig. 3    einen sich in der Flächenausdehnung des Verankerungselements erstreckenden Schnitt gemäß der Schnittlinie III-III in Fig.1 mit Blick auf ein mit der Wanne des Panzerfahrzeugs verbundenes Befestigungsteil,

Fig. 4    in einer Längsschnittansicht wie in Fig. 1 eine abgewandelte Ausführungsform,

Fig. 5    eine weitere Abwandlungsform in einer Längsschnittansicht wie in Fig. 1,

Fig. 6    einen Querschnitt gemäß der Schnittlinie VI-VI in Fig. 5 durch die in dieser Figur veranschaulichte Abwandlungsform,

Fig. 7    ebenfalls eine weitere Ausführungsform in einer Ansicht wie in Fig. 3,

Fig. 8    einen Querschnitt gemäß der Schnittlinie VIII-VIII in Fig. 7 durch das in dieser Figur veranschaulichte Verankerungselement,

Fig. 9    in einer Schnittansicht wie in Fig. 1 eine Ausführungsform mit einem in ein Panzerungselement eingebetteten Halteblech des einen Befestigungsteils,

Fig. 10    gleichfalls eine weitere Ausführungsform in einer Schnittansicht ähnlich Fig. 2,

Fig. 11    eine Schnitt gemäß der Schnittlinie XI-XI in Fig. 10 durch das Verankerungselement, jedoch vor dem formschlüssig festen Zusammenwirken der bajonettverschlußartigen Schnellkupplungsmittel,

Fig. 12    in einer Ansicht wie in Fig. 10 eine Ausführungsform eines Verankerungselements, das mittels als Schraubgewinde ausgebildeten Schnellkupplungsmitteln gleichermaßen mit dem Verankerungsgrund und einer an letzterem zu befestigenden Panzerungselement od. dgl. fest, jedoch lösbar verbindbar ist, und

Fig. 13    gleichfalls in einer Ansicht wie in Fig. 10 eine Ausführungsform mit nochmals abweichend gestalteten, einander formschlüssig mit Spiel hintergreifendne Haltemitteln.

Bei dem in den Fig. 1 bis 3 veranschaulichten Verankerungselement 10 ist ein im wesentlichen plattenförmiger Pufferkörper 11 aus Gummi oder einem Material vergleichbarer Federungs- und Dämpfunseigenschaften zwischen zwei sich in Parallelebenen zueinander erstreckenden Bodenblechen 12, 13 aufgenommen und flächenhaft mit diesen Bodenblechen durch Verkleben oder Vulkanisieren verbunden. Jedes der Bodenbleche 12,13 ist von zwei in bezug auf die Flächenausdehnung des Pufferkörpers 11 etwa symmetrisch angeordneten kreisringförmigen Ausnehmungen 14, 15 durchdrungen, so daß im Bereich dieser Ausnehmungen Freiräume gebildet sind, in die bei einer Verformung des Pufferkörpers, etwa beim Zusammendrücken der Bodenbleche und/oder bei deren Verschiebung gegeneinander, Material des Pufferkörpers ausweichen kann.

Im Bereich der Ränder der die Bodenbleche 12, 13 durchdringenden Ausnehmungen sind mit jedem Bodenblech zwei halbkreisförmige Bügel 16 bzw. 17 verschweißt. Die mit dem einen Bodenblech verschweißten Bügel 16 sind fluchtend zueinander angeordnet, während die Bügel 17 mit dem anderen Bodenblech in Parallellage zueinander verschweißt sind. Die Anordnung ist dabei so getroffen, daß jeweils ein mit dem einen Bodenblech verschweißter Bügel 16 von einem mit dem anderen Bodenblech verschweißten Bügel 17 mit Spiel umgriffen ist und die einander formschlüssig mit Spiel umgreifenden Bügel 16, 17 sind innerhalb des Pufferkörpers 11 aufgenommen, beispielsweise in diesen einvulkanisiert.

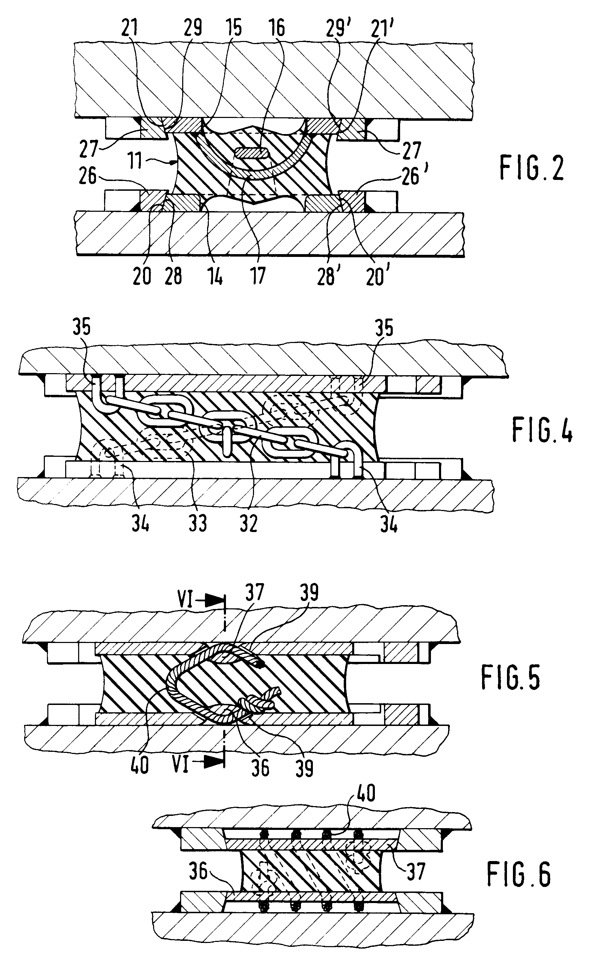

Von dem in der Draufsicht gesehen als rechteckige Platte ausgebildeten Pufferkörper 11 erstrecken sich im Bereich einer Stirnseite mit Lochungen versehen flanschartige Abschnitte 18 bzw. 19 der Bodenbleche 12, 13 fort. Wie insbesondere die Fig. 2 und 3 zeigen, verlaufen die äußeren Längskanten 20, 20' bzw. 21,21' der Bodenbleche 12, 13 zu den mit Lochungen versehenen flanschartigen Abschnitten hin leicht divergierend unter Ausbildung einer Keilform und sind ferner mit schwalbenschwanzartigen Halteflächen versehen. Die Bodenbleche 12, 13 bilden zusammen mit an einer nur angedeuteten Fahrzeugwand 24 eines im übrigen nicht weiter dargestellten Fahrzeugs einerseits und den Innenseiten von Panzerungselementen 25 andererseits verschweißten Halteblechen 26, 26' bzw. 27, 27' den festen, jedoch wahlweise lösbaren Anschluß der Verankerungselemente sowohl an eine derartige Bodenwanne als auch an ein Panzerungselement vermittelnden Bodenteile der Verankerungselemente. Demgemäß sind die Haltebleche 26, 26' bzw. 27, 27' mit den zu den schwalbenschwanzartig ausgebildeten Längskanten 20,20' bzw. 21, 21' der Bodenbleche 12, 13 korrespondierend ausgerüsteten schwalbenschwanzartigen Längsführungen 28, 28' bzw. 29, 29' versehen und in einem dem keilförmigen Verlauf der Außenkanten der Bodenbleche entsprechenden Abstande voneinander mit der angedeuteten Fahrzeugwand 24 des Fahrzeugs einerseits und der Innenseite des in den Fig. 1 und 2 veranschaulichten Panzerungselements 25 andererseits verschweißt, wie dies in der Zeichnung angedeutet ist.

Nachdem in hier im einzelnen nicht interessierender Weise bei einem mit derartigen Halteblechen bestückten Fahrzeug ein mit entsprechenden Halteblechen ausgerüstetes Panzerungselement 25 beispielsweise mittels eines Krans in seine bestimmungsgemäße Lage gebracht ist, gelingt die Verankerung eines derartigen Panzerelementes in einfacher Weise, indem die den Pufferkörper 11 zwischen sich aufnehmenden Bodenbleche 12, 13 zwischen die sich keilförmig verengenden Führungsabschnitte 28, 28' bzw. 29, 29' der Haltebleche 26,26' und 27, 27' sowohl an der Fahrzeugwanne 24 als auch an dem Panzerungselement 25 eingeschoben und durch leichte Kraftanwendung verkeilt werden. Dabei tritt angesichts der Wahl der Neigungswinkel der zusammenwirkenden Halteflächen Selbsthemmung zwischen den Halteblechen und Bodenblechen ein. Der Sicherung in der Haltelage dient dann je ein in der aus Fig.3 ersichtlichen Weise von der Offenseite zwischen die jeweiligen Haltebleche eingeschobener und mittels eines leicht entfernbaren Schweißpunktes festgelegter Haltebügel 30, 30'.

Die Ausführungsform nach Fig. 4 unterscheidet sich von der Ausführungsform nach den Fig. 1 bis 3 im Prinzip nur dadurch, daß anstelle der einander formschlüssig umgreifenden und mit den Bodenblechen verschweißten halbkreisförmigen Bügel in den Pufferkörper Ketten 32, 33 mit gegenseitigem Spiel ihrer einzelnen Glieder eingebettet und mit ihren voneinander entfernten Enden jeweils in mit einem der Bodenbleche verschweißte Ösen 34, 35 eingehängt sind. Angesichts des gegenseitigen Spiels der in den Pufferkörper eingebetteten Glieder der Ketten ist innerhalb vorbestimmter Grenzen die Verformbarkeit des Pufferkörpers möglich, und zwar sowohl durch Verschiebung der den Pufferkörper zwischen sich aufnehmenden Bodenbleche als auch in einer Richtung senkrecht dazu.

Bei der Ausführungsform nach den Fig. 5 und 6 sind die beiden den Pufferkörper zwischen sich aufnehmenden Bodenbleche im Bereich von in den Pufferkörper hineingeformten Einprägungen 36, 37 mit Lochungen 38, 39 versehen und durch diese Lochungen ist ein mit seinen jeweiligen Enden durch Knotenbildungen festgelegtes flexibles Seil 40 aus hochfestem Material, wie Keflar, spiralig hindurchgezogen sowie in den Pufferkörper eingebettet.

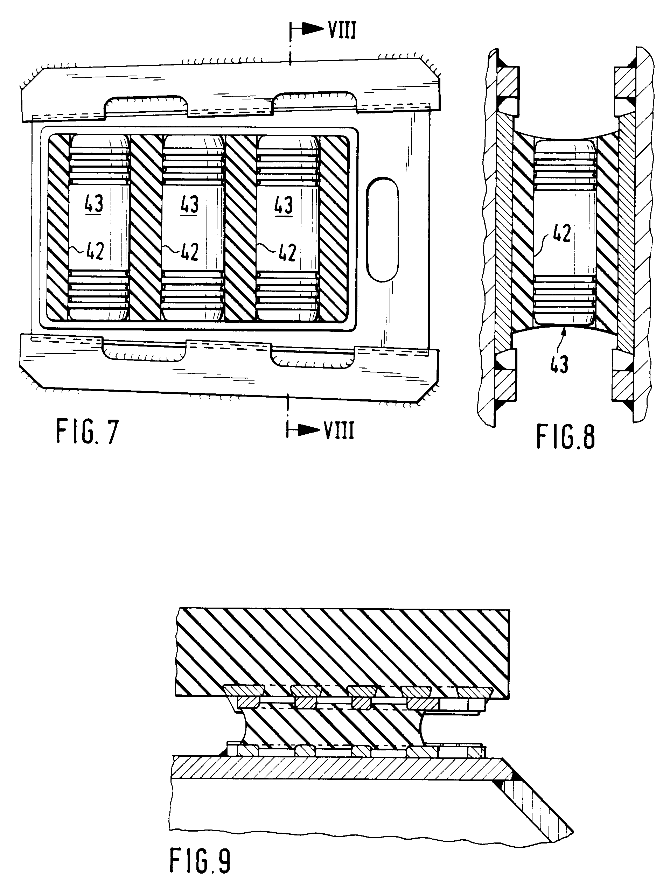

Bei der Ausführungsform nach den Fig. 7 und 8 erstrecken sich im Abstand von den beiden Bodenblechen quer durch den Pufferkörper drei ringzylindrische Ausnehmungen 42 hindurch, in die Stopfen 43 aus einem Puffermaterial eingesetzt, beispielsweise eingeklebt sind, deren Härte und Dämpfungseigenschaften von den entsprechenden Eigenschaften des Materials des Pufferkörpers verschieden sind.

Bei der Ausführungsform nach Fig. 9 besitzt das den Anschluß an ein Panzerungselement vermittelnde Befestigungsteil ein in das Panzerungselement eingebettetes Halteblech, in das in gleicher Weise wie in Verbindung mit Fig. 1 oben erläutert zwischen sich keilförmig verengenden und schwalbenschwanzartig ausgebildeten Halteflächen das zu dem Panzerungselement hinweisende Bodenblech einschiebbar und dadurch mit dem Halteblech verbindbar ist.

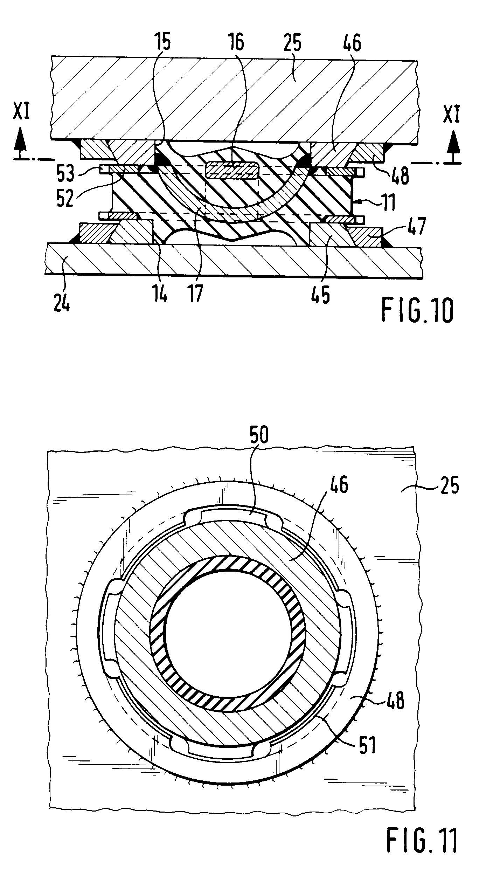

Die Ausführungsform nach den Fig. 10 und 11 unterscheidet sich von den bisher erörterten Ausführungsformen dadurch, daß die mit dem Pufferkörper 11 festverbundenen Bodenbleche 45, 46 und die an der Fahrzeugwand 24 einerseits und an dem Panzerungselement 25 andererseits angeschweißten Haltebleche 47, 48 als kreisringförmige Scheiben ausgebildet sind. Die Bodenbleche 45, 46 sind mit unter einem vorbestimmten Teilungsmaß im Abstand voneinander über den Umfang verteilt angeordneten radialen Ansätzen 50 als Verrastungskonturen versehen, die sich nach außen und über einen vorbestimmten Umfangswinkel erstrecken, während die Haltebleche 47, 48 im gleichen Teilungsmaß angeordnete gleichartige radiale Ansätze 51 haben, die sich aber nach innen erstrecken. Ferner sind mit den Bodenblechen Einstellscheiben 52 fest verbunden, die sich radial über die Bodenbleche und den zwischen diesen aufgenommenen Pufferkörper 11 hinauserstrecken und am äußeren Umfang mit Außenverzahnungen 53 versehen sind. Diese Außenverzahnungen ermöglichen das unproblematische Ansetzen eines Hakenschlüssels oder eines anderen geeigneten Werkzeugs, um die Verankerungslemente in ihrer Gesamtheit um eine sich vertikal zur Flächenerstreckung der Bodenbleche verlaufende Achse zu drehen und dadurch die Verrastungskonturen in ihre einander hintergreifende Kupplungslage zu bringen bzw. zu entkuppeln. Im übrigen ist das in den Fig. 10 und 11 veranschaulichte Verankerungselement mit Bügeln 16, 17 ausgerüstet, die einander mit Spiel umgreifen und wechselseitig an den beiden Bodenplatten angeschweißt sowie im Puffererkörper eingebettet sind.

Bei der Montage dieses Verankerungselementes werden die radial über den Umfang der kreisringförmigen Bodenbleche 45, 46 vorstehenden Ansätze 50 im Bereich entsprechender Aussparungen zwischen den sich radial nach innen erstreckenden Ansätzen 51 der Haltebleche 47, 48 eingeführt und dann durch einfache Drehung des gesamten Verankerungselementes die als Verrastungskonturen dienenden Ansätze der Bodenbleche und Haltebleche in einander formschlüssig hintergreifende Haltelagen gebracht. Die Kupplungslage wird dabei gleichzeitig im Bereich der beiden Bodenbleche erreicht. Der besondere Vorteil gegenüber den weiter oben erörterten Ausführungsformen besteht darin, daß bei dieser Ausführungsform bajonettverschlußartig zusammenwirkenden Verrastungskonturen eine allseitige Belastbarkeit des Verankerungselementes parallel zur Montageebene gegeben ist.

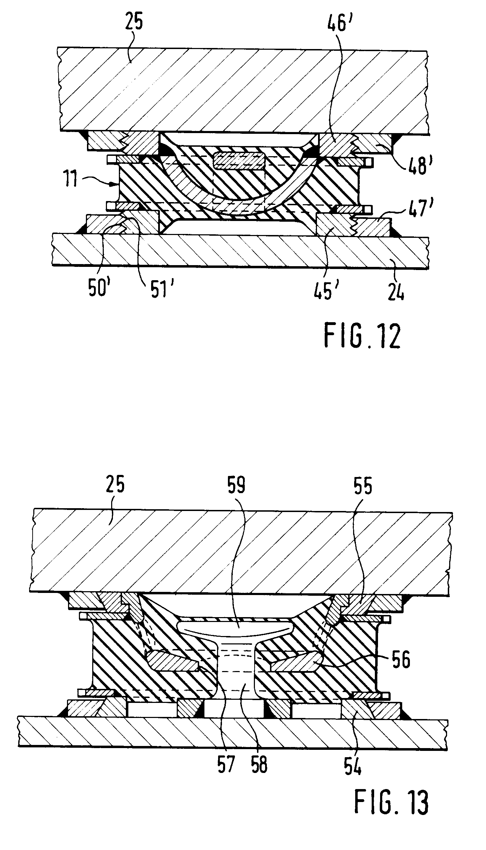

Bei der Ausführungsform nach Fig. 12 sind anstelle der bajonettartig ausgebildeten Schnellkupplungsmittel die Bodenbleche 45′, 46′ und die am Verankerungsgrund 24 bzw. dem Panzerungselement 25 angeschweißten Haltebleche 47′, 48′ als zusammenwirkende Schraubgewinde ausgebildet. Die kreisringscheibenförmigen Bodenbleche haben Außengewinde 50′, während in die entsprechenden Ausnehmungen der mit dem Verankerungsgrund bzw. dem Panzerungselement verschweißten Haltebleche 47′, 48′ entsprechende Innengewinde 51′ eingeschnitten sind. Im übrigen hält sich diese Ausführungsform im Rahmen der Ausführungsform nach den Fig. 10 und 11.

Die Ausführungsform nach Fig. 13 unterscheidet sich insofern von der Ausführungsform nach den Fig. 10 und 11, als mit dem einen Bodenblech 55 ein Haltekorb 56 mit einer zentralen Mittelausnehmung 57 fest verbunden ist, während sich von dem anderen Bodenblech 54 ein durch die genannte Mittelausnehmung 57 des Haltekorbes 56 hindurchragender Zapfen 58 forterstreckt, der mit dem Bodenblech 54 verschweißt ist und an dem vom Bodenblech entfernten Ende einen Teller 59 aufweist, der die zentrale Mittelausnehmung 57 im Haltekorb 56 hintergreift. Die zentrale Mittelausnehmung 57 im Haltekorb 56 ist bei dieser Ausführungsform als Langloch und der am freien Ende des mit dem einen Bodenblech 54 verschweißten Schaftes 58 angeordnete Teller 59 hammerkopfartig ausgebildet und so angeordnet, daß die Längenerstreckung dieses Tellers 59 sich quer zur Längenerstreckung der langlochartigen Mittelausnehmung 57 im Haltekorb erstreckt, so daß der Teller den Haltekorb auf der vom Bodenblech 54 abgewandten Seite formschlüssig hintergreift.

Charakteristisch für alle vorbeschriebenen Ausführungsformen und mithin kennzeichnend für die Erfindung ist, daß durch die plattenförmige Ausbildung des Pufferkörpers mit einer im Vergleich zu seiner Flächenausdehnung nur geringen Dicke und einer eben solchen Ausbildung der den Pufferkörper zwischen sich aufnehmenden Bodenbleche aus Flachmaterial gleichfalls geringer Dicke im Vergleich zu ihren Flächenausdehnungen ein Verankerungselement geschaffen worden ist, das einerseits eine geringe Bauhöhe aufweist und damit die Verankerung von Panzerungselementen oder sonstigen schweren Platten in geringem Abstand von einem Verankerungsgrund ermöglicht und andererseits eine Beteiligung praktisch des gesamten Puffererkörpers an der angestrebten Feder- und Dämpferwirkung gewährleistet. Darüber hinaus ermöglicht das erfindungsgemäße Verankerungselement angesichts der Ausrüstung der Befestigungsteile mit Schnellkupplungsmitteln in Gestalt formschlüssig zusammenwirkender Keilflächen eine einfache Montage und Demontage und damit die wahlweise Anbringung unterschiedlicher Panzerungselemente an beispielsweise der Wanne eines Panzerfahrzeugs oder sonstigen Einrichtungen.

## Patentansprüche

1. Verankerungselement zum Befestigen schwerer Platten od. dgl. an einem Verankerungsgrund, insbesondere zum Befestigen von Panzerungselementen oder Zusatzpanzerungen an Fahrzeugen, mit einem begrenzt elastisch verformbaren Pufferkörper (11) aus Gummi oder einem Material ähnlicher Eigenschaften und mit zwei fest mit dem Pufferkörper verbundenen und durch diesen auf Abstand voneinander gehaltenen Befestigungsteilen (12, 13; 45, 46; 45', 46', 54, 55), die im Rahmen der Verformbarkeit des Pufferkörpers begrenzt gegeneinander bewegbar sind und von denen das eine mit dem zu verankernden Panzerungselement (25) und das andere mit dem Verankerungsgrund (24) verbindbar ist,
dadurch gekennzeichnet,
daß der Pufferkörper (11) plattenförmig ausgebildet ist, daß jedes Befestigungsteil ein Bodenblech (12, 13; 45, 46; 45', 46; 54, 55) von im Vergleich zu seiner Flächenausdehnung geringer Dicke besitzt und daß die Bodenbleche den Pufferkörper zwischen sich aufnehmen sowie mit letzterem in den jeweiligen Kontaktebenen flächenhaft verbunden sind.

2. Verankerungselement nach Anspruch 1, dadurch gekennzeichnet, daß der Pufferkörper (11) und/oder die Bodenbleche (12, 13; 45, 46; 45', 46'; 54, 55) der Befestigungsteile mit Ausnehmungen (14, 15) zum Begünstigen der elastischen Verformbarkeit des Pufferkörpers infolge Ausweichens von Puffermaterial in die von den Ausnehmungen gebildeten Freiräume hinein versehen sind.

3. Verankerungselement nach Anspruch 2, dadurch gekennzeichnet, daß die Ausnehmungen im Pufferkörper (11) im Bereich der Kontaktebenen in wenigstens einem der Bodenbleche (12, 13; 45, 46'; 45', 46; 54, 55) angeordnet sind.

4. Verankerungselement nach einem der Ansprüche 1 bis 3, dadurch gekennzeichnet, daß der Pufferkörper (11) von wenigstens einer sich im Abstand von den Bodenblechen der Befestigungsteile erstreckenden Ausnehmung (42) durchdrungen und in letzterer ein Stopfen (43) aus Puffermaterial einer vom Material des Pufferkörpers abweichenden Härte aufgenommen ist.

5. Verankerungselement nach einem der Ansprüche 1 bis 4, dadurch gekennzeichnet, daß in den Pufferkörper (11) einander mit Spiel hintergreifende und dessen elastische Verformbarkeit innerhalb vorgegebener Grenzen zulassende Haltemittel (16, 17, 32, 33, 40; 56, 58, 59) eingebettet und wechselseitig mit den Bodenblechen (12, 13; 45, 46; 45', 46', 54, 55) der Befestigungsteile fest verbunden sind.

6. Verankerungselement nach Anspruch 5, dadurch gekennzeichnet, daß mit jedem Bodenblech als Haltemittel wenigstens eine bügelartige Öse (16, 17) verschweißt ist und daß diese Ösen einander mit Spiel umgreifen.

7. Verankerungselement nach Anspruch 5, gekennzeichnet durch wenigstens eine mit gegenseitigem Spiel ihrer einzelnen Glieder in den Pufferkörper (11) eingebettete Kette (32, 33) als Haltemittel, deren voneinander entfernte Enden jeweils mit einem der beiden Bodenbleche (12, 13) der Befestigungsteile fest verbunden sind.

8. Verankerungslement nach Anspruch 5, dadurch gekennzeichnet, daß als Haltemittel wenigstens ein flexibles Seil (40) aus hochfestem Werkstoff, etwa aus Keflar spiralig hindurchgezogen und mit letzteren durch Festlegung der jeweiligen Seilenden sowie durch Einbettung in den Pufferkörper (11) fest verbunden ist.

9. Verankerungselement nach Anspruch 5, dadurch gekennzeichnet, daß mit dem einen Bodenblech (55) ein im Pufferkörper (11) eingebetteter Haltekorb (56) mit wenigstens einer Ausnehmung (57) und mit dem anderen Bodenblech (54) ein sich durch die Ausnehmung (57) des Haltekorbes (56) hindurcherstreckender Schaft (58) mit einem den Haltekorb auf der anderen Seite formschlüssig hintergreifenden Teller (59) am freien Schaftende fest verbunden ist.

10. Verankerungselement nach Anspruch 9, dadurch gekennzeichnet, daß die Ausnehmung (57) in dem mit dem einen Bodenblach (55) festverbundenen Haltekorb (56) langlochartig oder oval und der Teller (59) am freien Ende des mit dem anderen Bodenblech (54) verbundenen Schafts (58) hammerkopfartig ausgebildet sowie mit seiner Längserstreckung um etwa 90° verdreht gegenüber der Längserstreckung der Ausnehmung im Haltekorb angeordnet ist.

11. Verankerungselement nach einem der Ansprüche 1 bis 10, dadurch gekennzeichnet, daß die Befestigungteile aus den fest mit dem Pufferkörper (11) verbundenen Bodenblechen (12, 13; 45, 46; 45' 46'; 54, 55) und am Verankerungsgrund einerseits und auf den zu verankernden Platten, wie Panzerungselemente od. dgl., andererseits befestigbaren Halteblechen (26, 26', 27, 27'; 47, 48; 47', 48') bestehen und daß die Bodenbleche und Haltebleche mit Schnellkupplungsmitteln zum Herstellen einer festen, jedoch wahlweise lösbaren Verbindung versehen sind.

12. Verankerungselement nach Anspruch 11, dadurch gekennzeichnet, daß die Schnellkupplungsmittel zum Herstellen einer festen, jedoch wahlweise lösbaren Verbindung aus Führungsflächen (20, 20') und (21, 21') an zwei einander gegenüberliegenden Längskanten der Bodenbleche (12, 13) und letztere zwischen sich aufnehmenden und die Längskanten der Bodenbleche auf der zum Pufferkörper (11) hinweisenden Seite zumindest abschnittsweise formschlüssig hintergreifenden Führungsabschnitten (28, 28') und (29, 29') der Halteblebe bestehen und daß die Bodenbleche von einer Seite aus zwischen die Führungsabschnitte der Haltebleche einschiebbar sind.

13. Verankerungselement nach Anspruch 12, dadurch gekennzeichnet, daß die Führungsflächen (20, 20'; 21, 21') der Bodenbleche und die damit korrespondierenden Führungsabschnitte (28, 28'; 29, 29') der Haltebleche in der Art von Schwalbenschwanzführungen ausgebildet sind.

14. Verankerungselement nach Anspruch 12 oder 13, dadurch gekennzeichnet, daß die Führungsabschnitte (28, 28'; 29, 29') der Haltebleche, in einer Draufsicht gesehen, sich zu einer Einschubseite für die Bodenbleche unter einem Selbsthemmung vermittelnden Öffnungswinkel divergierend zueinander erstrecken, während die damit korrespondierenden Führungsflächen (20, 20'; 21, 21') der Bodenbleche eine angepaßte Keilform bilden.

15. Verankerungselement nach Anspruch 11, dadurch gekennzeichnet, daß die mit dem Pufferkörper (11) festverbundenen Bodenbleche (45, 46; 45', 46'; 54, 55) und die am Verankerungsgrund einerseits sowie an den zu verankernden Panzerungselementen oder dergleichen andererseits befestigbaren Haltebleche (47, 48; 47', 48') als - im montierten Zustand einander umschließende und miteinander formschlüssig hintergreifenden Verrastungskonturen als Schnellkupplungsmittel zum Herstellen einer festen, jedoch wahlweise lösbaren Verbindung versehene Scheiben ausgebildet sind.

16. Verankerungselement nach Anspruch 15, dadurch gekennzeichnet, daß die Verrastungskonturen der Bodenbleche (45, 46) und der Haltebleche (47, 48) als über den jeweiligen Scheibenumfang verteilt angeordnete und infolge Verdrehung des Verankerungselements in eine einander formschlüssig hintergreifende Kupplungslage bringbare bzw. entriegelbare radiale Ansätze (50, 51) ausgebildet sind.

17. Verankerungselement nach Anspruch 16, dadurch gekennzeichnet, daß die radialen Ansätze (50, 51) der Bodenbleche (45, 46) und/oder Haltebleche (47, 48) mit spiraligen oder exzentrischen Anzugsflächen versehen sind, die in der Kupplungslage formschlüssig und unter Klemmung zusammenwirken.

18. Verankerungslement nach Anspruch 15, dadurch gekennzeichnet, daß die Bodenbleche (45', 46') mit Außengewinden (50') und die Haltebleche (47', 48') mit entsprechenden Innengewinden (51') als Verrastungskonturen versehen sind und daß die beiden Bodenbleche (47', 48') - und entsprechend die zugeordneten Haltebleche - gegenläufige Gewinde gleicher Steigung aufweisen.

19. Verankerungselement nach einem der Ansprüche 15 bis 18, dadurch gekennzeichnet, daß mit den Bodenblechen (45, 46; 45', 46'; 54, 55) Außenverzahnungen (52) aufweisende und radial über die Bodenbleche vorstehenden Einstellscheiben (52) zum Ansetzen von Hakenschlüsseln oder ähnlichen Betätigungswerkzeugen fest verbunden sind.

## Claims

1. An anchorage element for fixing heavy plates or the like to an anchorage base, in particular for fixing armouring elements or additional armouring members to vehicles, comprising a limitedly elastically deformable buffer body (11) of rubber or a material of similar properties, and two fixing portions (12, 13; 45, 46; 45', 46', 54, 55) which are fixedly connected to the buffer body and which are held at a spacing from each other by same and which are limitedly movable relative to each other within the limits of the deformability of the buffer body and one of which can be connected to the armouring element (25) to be anchored and the other can be connected to the anchorage base (24), characterised in that the buffer body (11) is of a plate-like configuration, that each fixing portion has a base plate (12, 13; 45, 46; 45', 46; 54, 55) of small thickness in comparison with its areal extent and the base plates accommodate the buffer body between them and are connected to the buffer body in surface contact therewith in the respective contact planes.

2. An anchorage element according to claim 1 characterised in that the buffer body (11) and/or the base plates (12, 12; 45, 46; 45', 46'; 54, 55) of the fixing portions are provided with recesses (14, 15) for promoting elastic deformability of the buffer body as result of deflection of buffer material into the spaces formed by the recesses.

3. An anchorage element according to claim 2 characterised in that the recesses in the buffer body (11) are arranged in the region of the contact planes in at least one of the base plates (12, 13; 45, 46'; 45', 46; 54, 55).

4. An anchorage element according to one of claims 1 to 3 characterised in that the buffer body has passing therethrough at least one opening (42) which extends at a spacing from the base plates of the fixing portions, and accommodated in the opening (42) is a plug (43) of buffer material of a hardness which differs from the material of the buffer body.

5. An anchorage element according to one of claims 1 to 4 characterised in that embedded in the buffer body (11) are holding means (16, 17, 32, 33, 40; 56, 58, 59) which engage with clearance one behind the other and which permit elastic deformability of the buffer body within predetermined limits, the holding means being alternately fixedly connected to the base plates (12, 13; 45, 46; 45', 46'; 54, 55) of the fixing portions.

6. An anchorage element according to claim 5 characterised in that at least one loop-like eye (16, 17) is welded to each base plate as a holding means and that said eyes engage with clearance around each other.

7. An anchorage element according to claim 5 characterised by at least one chain (32, 33) as the holding means, which is embedded in the buffer body (11) with mutual play between its individual members and whose ends which are remote from each other are each fixedly connected to a respective one of the two base plates (12, 13) of the fixing portions.

8. An anchorage element according to claim 5 characterised in that as the holding means at least one flexible cable (40) of high-strength material, for example Kevlar, is passed in a spiral configuration through holes (39) in the base plates (12, 13) and is fixedly connected to the latter by fixing of the respective ends of the cable and by embedding in the buffer body (11).

9. An anchorage element according to claim 5 characterised in that a holding basket (56) which has at least one opening (57) and which is embedded in the buffer body (11) is fixedly connected to the one base plate (55) and fixedly connected to the other base plate (54) is a stem member (58) which passes through the opening (57) in the holding basket (56) and which has at its free end a plate portion (59) which positively engages behind the holding basket on the other side.

10. An anchorage element according to claim 9 characterised in that the opening (57) in the holding basket (56) which is fixedly connected to the one base plate (55) is slot-like or oval and the plate (59) at the free end of the stem member (58) which is connected to the other base plate (54) is of a hammer head-like configuration and is arranged with its longitudinal extent turned through about 90° relative to the longitudinal extent of the opening in the holding body.

11. An anchorage element according to one of claims 1 to 10 characterised in that the fixing portions comprise the base plates (12, 13; 45, 46; 45', 46'; 54, 55) which are fixedly connected to the buffer body (11), and holding plates (26, 26', 27, 27'; 47, 48; 47', 48') which can be fixed to the anchorage base on the one hand and to the plates to be anchored such as armouring elements or the like on the other hand, and that the base plates and holding plates are provided with quick-action coupling means for making a strong but selectively releasable connection.

12. An anchorage element according to claim 11 characterised in that the quick-action coupling means for making a strong but selectively releasable connection comprise guide surfaces (20, 20') and (21, 21') on two mutually oppositely disposed longitudinal edges of the base plates (12, 13) and guide portions (28, 28') and (29, 29') of the holding plates, which guide portions accommodate the base plates between them and positively engage at least in a portion-wise manner behind the longitudinal edges of the base plates on the side which is towards the buffer body (11), and that the base plates can be inserted from one side between the guide portions of the holding plates.

13. An anchorage element according to claim 12 characterised in that the guide surfaces (20, 20'; 21, 21') of the base plates and the guide portions (28, 28'; 29, 29') of the holding plates, which correspond thereto, are of a configuration in the manner of dovetail guides.

14. An anchorage element according to claim 12 or claim 13 characterised in that the guide portions (28, 28'; 29, 29') of the holding plates, as viewed in plan, extend in divergent relationship with each other to an insertion side for the base plates at an aperture angle which gives a self-locking action, while the guide surfaces (20, 20'; 21, 21') of the base plates, which correspond thereto, form an adapted wedge configuration.

15. An anchorage element according to claim 11 characterised in that the base plates (45, 46; 45', 46'; 54, 55) which are fixedly connected to the buffer body (11) and the holding plates (47, 48; 47', 48') which can be fixed to the anchorage base on the one hand and to the armouring elements or the like to be anchored on the other hand are in the form of discs which - in the assembled condition - embrace each other and which are provided with latching contours engaging positively one behind the other, as a quick-action coupling means for making a strong but selectively releasable connection.

16. An anchorage element according to claim 15 characterised in that the latching contours of the base plates (45, 46) and the holding plates (47, 48) are in the form of radial projections (50, 51) which are arranged in a distributed arrangement around the respective disc periphery and which as a result of rotation of the anchorage element can be moved into a coupling position of positively engaging one behind the other or can be unlocked.

17. An anchorage element according to claim 16 characterised in that the radial projections (50, 51) on the base plates (45, 46) and/or holding plates (47, 48) are provided with spiral or eccentric tightening surfaces which in the coupling position positively cooperate with a clamping effect.

18. An anchorage element according to claim 15 characterised in that the base plates (45', 46') are provided with external screwthreads (50') and the holding plates (47', 48) are provided with corresponding internal screwthreads (51') as latching contours and that the two base plates (47', 48') and in a corresponding fashion the associated holding plates have opposite-hand threads of the same pitch.

19. An anchorage element according to one of claims 15 to 18 characterised in that fixedly connected to the base plates (45, 46; 45', 46'; 54, 55) are setting discs (52) which have external tooth configurations (52) and which project radially beyond the base plates, for the fitting of hook wrenches or similar actuating tools.

**Revendications**

1. Elément d'ancrage pour la fixation de plaques lourdes ou analogue sur une base d'ancrage, en particulier pour la fixation d'éléments de blindage ou d'éléments additionnels de blindage sur une voie de circulation, avec un corps amortisseur (11) élastique et déformable de manière limitée en caoutchouc ou en autre matériau présentant des propriétés analogues relié à deux parties de fixation éloignées l'un de l'autre (12, 13; 45, 46; 45', 46'; 54, 55) qui dans le cadre de la formation des corps amortisseurs sont limitées en mouvement l'un vers l'autre et à partir desquelles l'un des éléments de blindage armé (25) peut être relié avec la base d'ancrage,

caractérisé en ce que l'amortisseur (11) est constitué par une plaque, en ce que chaque partie de fixation consiste en une paroi (12, 13; 45, 46; 45', 46'; 54, 55) qui présente, en comparaison avec sa surface une épaisseur inférieure et en ce que les parois du corps amortisseur sont reliées entre elles et avec ces dernières de manière à être en contact et liaison planes.

2. Elément d'ancrage selon la revendication 1, caractérisé en ce que le corps amortisseur (11) et/ou les parois (12, 13; 45, 46; 45', 46'; 54, 55) des parties de fixation sont munies de cales (14, 15) pour favoriser la déformation élastique du corps amortisseur à la suite de l'écrasement du matériau amortisseur, des chambres libres étant prévues à l'intérieur des cales.

3. Elément d'ancrage selon la revendication 2, caractérisé en ce que les cales dans le corps amortisseur (11) dans la région des contacts plans sont munies d'au moins une paroi (12, 13; 45, 46; 45', 46'; 54, 55).

4. Elément d'ancrage selon l'une des revendications 1 à 3, caractérisé en ce que le corps amortisseur (11) est traversé par au moins une cale (42) s'étendant à distance des parois des parties de fixation et en ce que dans ce dernier est prévu une butée (43) de matériau amortisseur de dureté différente du matériau du corps amortisseur.

5. Elément d'ancrage selon l'une des revendications 1 à 4, caractérisé en ce que dans le corps amortisseur (11) sont montées avec jeu des moyens de maintien (16, 17, 32, 33, 40; 56, 58, 59) dont la déformation élastique est limitée et qui sont liés rigidement avec les parois (12, 13; 45, 46; 45', 46'; 54, 55) des parties de fixation.

6. Elément d'ancrage selon la revendication 5, caractérisé en ce que, avec chaque paroi comme moyen de maintien est soudé au moins un oeillet (16, 17) en forme de palier et en ce que ces oeillets sont montés avec jeu.

7. Elément d'ancrage selon la revendication 5, caractérisé en ce que, au moins l'un des éléments avec jeu latéral monté dans le corps amortisseur (11) est constitué d'une chaîne (32, 33) enrobée en tant que moyen de maintien, dont les extrêmités éloignées sont reliées avec chacune des deux parois (12, 13) des parties de fixation.

**8.** Elément d'ancrage selon la revendication 5, caractérisé en ce que, en tant que moyen de maintien est prévu au moins un câble flexible (40) de matériau synthétique à haute résistance, tel que du KEVLAR, enroulé en spirale par des perforations (39) dans les parois (12, 13) et par enrobage dans le corps amortisseur (11) et est ainsi rigidement lié au corps amortisseur.

**9.** Elément d'ancrage selon la revendication 5, caractérisé en ce qu'une paroi (55) est enrobée une corbeille de maintien (56) dans le corps amortisseur (11) avec au moins une cale (57) et avec l'autre paroi (54) par la cale (57) de la corbeille de maintien (56) une tige (58) traversant avec la corbeille de maintien sur l'autre côté terminant l'assiette (59) sur l'extrêmité libre de la tige fixée rigidement.

**10.** Elément d'ancrage selon la revendication 9, caractérisé en ce que la cale (57) qui est fixée rigidement avec la paroi (55) de la corbeille de maintien (56) est ovale ou longitudinale et en ce que l'assiette (59) est reliée par des tiges à têtes de marteau à son extrêmité libre avec l'autre paroi (54) de sorte qu'elle s'étende à sensiblement 90° de l'extension longitudinale de la cale dans la corbeille de maintien.

**11.** Elément d'ancrage selon l'une des revendications 1 à 10, caractérisé en ce que la partie de fixation avec le corps amortisseur (11) relié aux parois (12, 13; 45, 46; 45', 46'; 54, 55) et à la base d'ancrage d'un côté et sur la plaque d'ancrage tel qu'un élément de blindage ou analogue de l'autre côté, comprend des parois de butée (26, 26', 27, 27'; 47, 48, 47', 48') et en ce que les parois et les butées sont fixées avec des moyens de couplage rapide pour la réalisation d'une liaison rigide mais amovible.

**12.** Elément d'ancrage selon la revendication 11, caractérisé en ce que les moyens de couplage rapide pour réaliser une fixation rigide mais néanmoins amovible des flancs de guidage (20, 20') et (21, 21') contre les deux bords longitudinaux des parois (12, 13) et entre ces derniers et les bords longitudinaux des parois sur le corps amortisseur (11) du côté intérieur constituent en section des griffes de guidage (28, 28') et (29, 29') des butées et en ce que les parois d'un côté entre les guides des éléments de maintien sont détachables.

**13.** Elément d'ancrage selon la revendication 12, caractérisé en ce que les flancs de guidage (20, 20'; 21, 21') des parois et des sections de guidage correspondantes (28, 28'; 29, 29') des butées sont disposés de manière à constituer des guides en queue d'aronde.

**14.** Elément d'ancrage selon la revendication 12 ou 13, caractérisé en ce que les sections de guidage (28, 28'; 29, 29') des butées, en vue par dessus, constituent un côté d'insertion pour les parois, sous les équerres d'auto-centrage s'étendant en position divergente l'une par rapport à l'autre pendant que les flancs de guidage correspondants (20, 20'; 21, 21') des parois présentent une forme de coin.

**15.** Elément d'ancrage selon la revendication 11, caractérisé en ce que les parois (45, 46; 45', 46'; 54, 55) rigidement liées au corps amortisseur (11) et à la base d'ancrage d'un côté et à un élément blindé ancrable ou analogue de l'autre côté, reliées à une paroi de butée (47, 48, 47', 48') sont, en position de montage, disposés pour constituer l'une avec l'autre un contour fermé en forme de disque avec un couplage rapide pour réaliser une liaison rigide mais amovible.

**16.** Elément d'ancrage selon la revendication 15, caractérisé en ce que les contours des parois (45, 46) et des butées (47, 48) sont disposés de manière à constituer un disque et par suite, la rotation des éléments d'ancrage l'un dans l'autre constitue un dispositif de couplage avec des rallonges radiales qui peuvent être ajoutées ou retirées.

**17.** Elément d'ancrage selon la revendication 16, caractérisé en ce que les rallonges radiales (50, 51) des parois (45, 46) et/ou des butées (47, 48) sont pourvues de flancs de rallonge en spirale ou excentriques qui sont fermés dans le dispositif de couplage et coopèrent au serrage.

**18.** Elément d'ancrage selon la revendication 15, caractérisé en ce que les parois (45', 46') sont pourvues de filetages extérieurs (50'), en ce que les butées (47', 48') sont pourvues de filetages intérieurs (51') constituant un contour et en ce que les deux parois (45, 46) et les butées correspondantes portent un filetage de même pas.

**19.** Elément d'ancrage selon l'une des revendications 15 à 18, caractérisé en ce que les parois (45, 46; 45', 46'; 54, 55) présentent un engrenage extérieur et radial sur la partie avant du disque (52) pour être appliqué rigidement avec des fermetures à crochets ou autres moyens

de liaison rigide.

25  FIG.1

15          15   II

13

17          11   19

III         III

18

24    14    16   14 17  II    16         12

26      28      20          10

30

11

16              16

17              18

30'

28'

24   26'   20'   17

FIG.3

FIG.2

FIG.4

FIG.5

FIG.6

FIG. 7

FIG.8

FIG.9

FIG.10

FIG.11

EP 0 271 048 B1

FIG.12

FIG. 13

18